**Europäisches Patentamt**

**European Patent Office**

**Office européen des brevets**

(19)

(11) Veröffentlichungsnummer : **0 124 704**
**B1**

# (12) EUROPÄISCHE PATENTSCHRIFT

(45) Veröffentlichungstag der Patentschrift :
07.03.90

(21) Anmeldenummer : 84102301.3

(22) Anmeldetag : 05.03.84

(51) Int. Cl.$^5$ : **C 01 C   3/00**

(54) **Verfahren zur Herstellung eines cyanursäurearmen Isocyansäure-Ammoniak-Gasgemisches und Vorrichtung zur Durchführung des Verfahrens.**

(30) Priorität : 05.05.83 DE 3316494

(43) Veröffentlichungstag der Anmeldung :
14.11.84 Patentblatt 84/46

(45) Bekanntmachung des Hinweises auf die Patenterteilung : 07.03.90 Patentblatt 90/10

(84) Benannte Vertragsstaaten :
AT DE FR GB IT NL

(56) Entgegenhaltungen :
EP—A— 0 073 650
AT—B—   257 621
AT—B—   258 881
DE—A— 1 717 162

(73) Patentinhaber : Chemie Linz Gesellschaft m.b.H.
St.Peter-Strasse 25
A-4021 Linz (AT)

(72) Erfinder : Weiss, Peter, Dipl.-Ing.
Steinweg 10
A-4061 Pasching (AT)
Erfinder : Sykora, Rudolf, Dr.
Sperlstrasse 11
A-4040 Linz (AT)
Der weitere Erfinder hat auf seine Nennug verzichtet

(74) Vertreter : Kunz, Ekkehard, Dr.
Chemie Holding AG Patentwesen St. Peter-Strasse
25
A-4021 Linz (AT)

**Beschreibung**

Die vorliegende Erfindung betrifft ein Verfahren zur Herstellung eines cyanursäurearmen Isocyansäure-Ammoniak-Gasgemisches durch Erhitzen von geschmolzenem Harnstoff in einer Wirbelschicht aus inertem Material sowie eine Vorrichtung hiezu.

Aus der DE-PS 1,204.643 ist bekannt, daß man ein Cyansäure-Ammoniak-Gasgemisch, das u. a. als Ausgangsmaterial für die Melaminsynthese dienen kann (AT-PS 256.117), durch thermische Spaltung von in eine Wirbelschicht aus inertem Material eingeblasenem Harnstoff erhalten kann. Dazu ist bereits vorgeschlagen worden, Harnstoff sowohl in fester Form (AT-PS 258.881), als auch in geschmolzener Form (AT-PS 280.316) in die Wirbelschicht einzutragen, wobei die letztgenannte Verfahrensweise bevorzugt ist. Allerdings müssen dabei bestimmte Bedingungen eingehalten werden.

Für diese Verfahren ist es nämlich wesentlich, daß die Verdampfung des Harnstoffs rest- und rückstandslos gelingt, da sich sonst Cyanursäure bildet, die sich fest auf den inerten Teilchen des Wirbelbettes niederschlägt und diese zusammenklebt, was zur Funktionsunfähigkeit der Anlage führt.

Um eine einwandfreie Zersetzung des geschmolzenen Harnstoffes auch im großtechnischen Betrieb, bei dem die Schwierigkeiten der Cyanursäurebildung im vermehrten Maße auftreten zu erreichen, muß der Harnstoff extrem rasch eine Mindesttemperatur von 320 °C erreichen und die Spaltung des Harnstoffes muß ebenso rasch vor sich gehen, damit es nicht zur Bildung von Cyanursäure kommen kann.

In der AT-PS 257.621 ist bei einem Verfahren zur Herstellung von Melamin aus Harnstoff in einem Wirbelbett aus hochporösen absorbierenden Feststoffen zur Vermeidung dieser Schwierigkeiten vorgeschlagen worden, den geschmolzenen Harnstoff mittels vorerhitzten Amoniaks als Sprühgas, das wenigstens Schallgeschwindigkeit besitzt, in den Wirbelschichtreaktor einzutragen. Das Einsprühen des Harnstoffes erfolgt dabei durch eine Düse, die in der Seitenwand eines zylindrischen Reaktors angebracht ist, der am Boden mit Einlaßöffnungen und am Deckel mit Auslaßöffnungen für das Wirbelgas versehen ist. Der geschmolzene Harnstoff wird also im rechten Winkel zur Strömungsrichtung des Trägergases eingetragen. Die für dieses Verfahren erforderliche hohe Gasgeschwindigkeit bringt aber einerseits einen beträchtlichen Energieaufwand und andererseits einen enormen Abrieb der festen Teilchen in der Wirbelschicht mit sich.

In der AT-PS 280.316 wird für ein Verfahren zur Herstellung eines Cyansäure-Ammoniak-Gasgemisches aus Harnstoff darauf hingewiesen, daß diese extrem hohe Gasgeschwindigkeit nicht erforderlich ist, wenn man die Versprühung von geschmolzenem Harnstoff so führt, daß die Harnstoffschmelze nicht mit Flächen in Berührung kommt, die unterhalb der Temperatur von 330° C liegen. Gemäß diesem Verfahren wird empfohlen, den geschmolzenen Harnstoff von unten, also parallel zur Strömungsrichtung des Wirbelgases mittels einer Zweistoffdüse in eine Wirbelschicht aus inertem körnigem Material, z. B. Sand einzutragen, wobei das Blasegas, vor allem Ammoniak, konzentrisch um die Austrittsstelle oder knapp vor der Austrittsstelle des geschmolzenen Harnstoffes austritt und so der Harnstoff stets von einem Mantel an Blasegas umgeben ist und jeder Kontakt mit dem Düsenrand ausgeschlossen ist. Um dies zu gewährleisten, wird für jene Variante des Verfahrens, bei der das Blasegas gleichzeitig mit dem geschmolzenen Harnstoff aus der Düse austritt, eine Geschwindigkeit des Blasegases von 40 bis 100 m/sec. vorgeschrieben, während bei jener Variante, bei der das Blasegas vor dem geschmolzenen Harnstoff aus der Düse austritt, bereits eine Gasgeschwindigkeit ab 20 m/sec. genügt, um die störende Cyanursäurebildung zu vermeiden.

Auch dieses Verfahren erfordert einen relativ hohen wirtschaftlichen Aufwand. Es hat sich nämlich in der Praxis gezeigt, daß das Blasegas mit höherer Geschwindigkeit aus der Düse austreten muß, als das Gas, das die Wirbelschicht aufrecht erhält, um durch Ausbildung eines Gasmantels einen wirksamen Schutz darstellen zu können. Der dazu nötige Druckunterschied von etwa 0,1 bar bedeutet nicht nur einen erhöhten Energiebedarf, sondern bringt ferner mit sich, daß getrennte Zu- und Ableitungen für das Blasegas eine gesonderte Einrichtung zur Erzeugung des höheren Druckes und schließlich auch Einrichtungen zur Regelung der Geschwindigkeit des Blasegases benötigt werden.

Schließlich zeigte sich, daß trotz der hohen Gasgeschwindigkeit Störungen durch Verkrustung des Ringspaltes der Düse, aus dem das Blasegas austritt, nicht gänzlich zu vermeiden sind.

Völlig überraschend hat sich nun gezeigt, daß diese Schwierigkeiten überwunden werden können und die Harnstoffzersetzung zu Isocyansäure und Ammoniak auf weniger aufwendige Weise möglich ist, wenn man den geschmolzenen Harnstoff mit mehr als dem 10-fachen der bisher üblichen Eintragungsgeschwindigkeit, nämlich mit einer Geschwindigkeit von 3-15 m/Sekunde ohne den bisher üblichen Schutzmantel durch ein Blasegas parallel zur Strömungsrichtung des Wirbelgases und oberhalb des Eintritts desselben in das Wirbelbett einträgt, wobei ein gewisser Mindestabstand von Reaktionswänden und/oder von anderen Wämetauschflächen einzuhalten ist.

Gegenstand der vorliegenden Erfindung ist demnach ein Verfahren zur Herstellung eines cyanursäurearmen Isocyansäure-Ammoniak-Gasgemisches durch Erhitzen von in eine Wirbelschicht aus inertem Material eingeblasenem, geschmolzenem Harnstoff auf Temperaturen von 300 bis 480 °C innerhalb von weniger als 1 Sekunde, das dadurch gekennzeichnet ist, daß der geschmolzene Harnstoff 35 bis 200 mm oberhalb der Eintrittsstelle des Wirbelgases mit einer Austrittsgeschwindigkeit von 3 bis 15 m/Sekunde parallel zur Strömungsrichtung des Wirbelgases und in einem Mindestabstand von 300 mm von Wandflächen und/oder dem Wärmetausch dienenden Flächen in das Wirbelbett eingedüst wird. Dabei ist eine Austrittsgeschwindigkeit des Harnstoffes von 3,5-12 m/Sekunde besonders bevorzugt.

Die Eindüsung des geschmolzenen Harnstoffs erfolgt mittels einer Düse, die an der Bodenplatte des Wirbelschichtreaktors angebracht ist, in der die Eintrittsöffnungen für das Wirbelgas angeordnet sind. Der Abstand der Düsenöffnung von der Bodenplatte des Wirbelschichtreaktors und damit von der Eintrittstelle des Wirbelgases beträgt dabei vorzugsweise 45-150 mm.

Dabei ist die Einhaltung des Mindestabstandes von Wand- oder dem Wärmetausch dienenden Flächen eine der Voraussetzungen für das Gelingen des erfindungsgemäßen Verfahrens. Wird der Harnstoff nur an einer Stelle im Reaktor in die Wirbelschicht eingeblasen, hat es sich am günstigsten erwiesen, den Eintragungsort im Mittelpunkt der Bodenfläche des Reaktors anzuordnen. Sind mehrere Eintragungsstellen vorgesehen, so sollen sie gleichmäßig über die Bodenfläche des Reaktors unter Beachtung des nötigen Mindestabstandes von den beheizten Flächen verteilt sein.

Für die Eintragung des Harnstoffs kann, soferne die Einrichtung vorhanden ist, zwar nach wie vor die bisher übliche Zweistoffdüse Anwendung finden, doch ist es zur Vermeidung der störenden Cyanursäurebildung nicht mehr erforderlich, daß ein Blasegas einer höheren Gasgeschwindigkeit als jenes Gas, das als Trägergas für die Wirbelschicht dient, durch den äußeren Ringspalt der Düse austritt. Es ist gemäß vorliegender Erfindung möglich geworden, durch den Ringspalt Gas mit gleicher Geschwindigkeit wie das Wirbelgas austreten zu lassen, das dann die gleiche Funktion übernimmt wie das Wirbelgas. Getrennte Einrichtungen zur Erzeugung des höheren Druckes für das Blasegas fallen damit weg.

Gemäß einer bevorzugten Ausführungsform des erfindungegemäßen Verfahrens wird auf die Eintragung mittels einer Zweistoffdüse und die Verwendung eines Blasegases jedoch überhaupt verzichtet und der geschmolzene Harnstoff über eine einfache Einstoffdüse in die Wirbelschicht eingebracht.

Es hat sich als günstig erwiesen, unmittelbar um die Austrittsstelle des Harnstoffes herum mehr Wirbelgas in den Reaktor eintreten zu lassen, als in den übrigen Bereichen der Bodenplatte des Reaktors, was durch Erhöhung der Fläche der Öffnungen pro Flächeneinheit gegenüber den übrigen Bereichen des Reaktors erzielt wird. Das kann entweder durch größere Querschnitte der Eintrittsöffnungen für das Wirbelgas rund um die Düse, oder durch eine erhöhte Anzahl von Eintrittsöffnungen pro Flächeneinheit für das Wirbelgas bewerkstelligt werden. Es können aber auch die Gaseintrittsöffnungen in Düsennähe so konstruiert sein, daß das Wirbelgas gezielt in Richtung der Düse in größerer Menge austritt, als an der der Düse abgekehrten Seite.

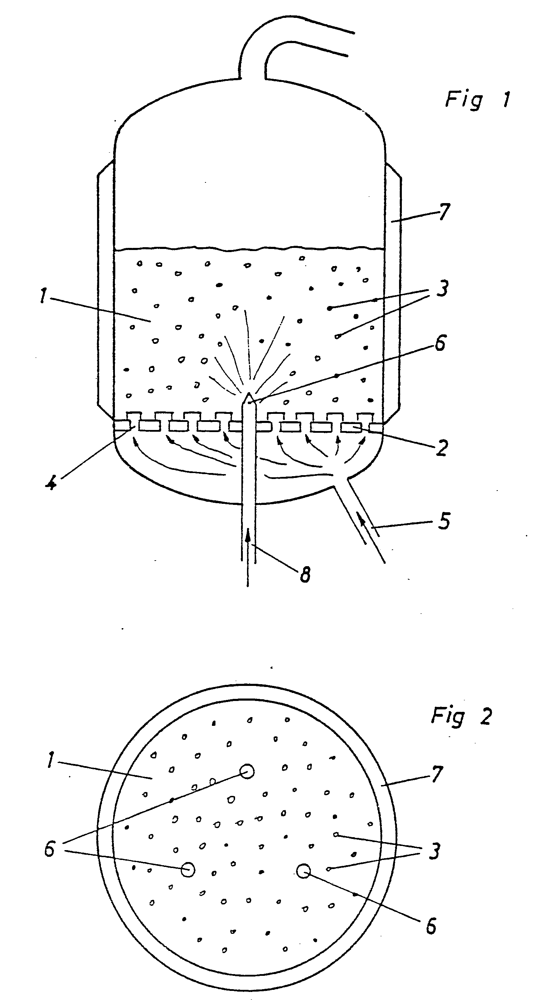

Ein weiterer Gegenstand der vorliegenden Erfindung ist ein Wirbelschichtreaktor, der zur Durchführung des erfindungsgemäßen Verfahrens geeignet ist. Die einfachste Form eines solchen Reaktors unter Verwendung einer Einstoffdüse ist in Figur 1 dargestellt.

Sie besteht aus einem zylindrischen Wirbelschichtreaktor 1 der mit einem gasdurchlässigen Boden 2 ausgestattet ist, auf dem sich das Wirbelbett aus inertem körnigem Material 3 befindet. Die Eintrittsöffnungen 4 für das Wirbelgas 5, die im Boden 2 angebracht sind, sind in Nähe der Düse 6, die im Mittelpunkt des Bodens steht, mit einem größeren Querschnitt ausgestattet als jene in Bezirken, die von der Düse weiter entfernt sind. Natürlich muß der Mindestabstand von den beheizten Reaktorwänden 7 von 300 mm auf alle Fälle gewahrt sein. 8 bedeutet die Zuführungsleitung der Schmelze zur Düse.

Sind mehrere Eintrittsstellen für den flüssigen Harnstoff vorgesehen, was vorallem für große Reaktoren zutrifft, die dann auch Wärmetauscher innerhalb des Reaktionsraumes besitzen, empfiehlt sich eine regelmäßige Anordnung der Düsen 6 auf dem Boden 2. So können z. B. 3 Düsen so angeordnet sein, daß sie die Eckpunkte eines gleichseitigen Dreiecks darstellen, wie dies in Figur 2 gezeigt ist, die einen Querschnitt durch einen erfindungsgemäßen Reaktor knapp oberhalb des Bodens 2 darstellt. Sind 4 Düsen vorgesehen, ist je nach Dimension des Reaktors sowohl die Anordnung einer vierten Düse im Mittelpunkt des gleichseitigen Dreiecks möglich, als auch eine Anordnung in Form eines Quadrats. In gleicher Weise ist auch die Anordnung von 5 und mehr Düsen denkbar, wobei natürlich ebenfalls auf die Einhaltung des Mindetabstandes zu den beheizten Reaktorwänden 7 bzw. zu ev. vorhandenen Wärmetauschern zu achten ist.

Als Konstruktion für die Düse ist im Prinzip jede Art geeignet, die den Austritt der Schmelze mit der erfindungsgemäß zu wählenden Geschwindigkeit erlaubt. Sie kann beispielsweise als Vollstrahl-, Flachstrahl- oder Rundstrahldüse ausgebildet sein.

Die nachfolgenden Beispiele sollen das erfindungsgemäße Verfahren näher erläutern, ohne die Erfindung darauf beschränken zu wollen.

Beispiel 1

Ein von außen beheizter Wirbelschichtreaktor von 1 200 mm Durchmesser und einer Höhe der Wirbelschicht von 2 000 mm, die mit Sand eines Durchmessers von 0,1 bis 1 mm befüllt ist, wird durch 450 N m³/h NH₃, die durch Öffnungen im kreisförmigen Boden eintreten, eine Wirbelschicht aufrecht erhalten. Der Reaktor ist von außen so beheizt und wird mit Ammoniak als Wirbelgas einer Temperatur beschickt, daß sich der Sand auf einer Temperatur von 360 °C befindet. Durch eine im Mittelpunkt des kreisförmigen Bodens angebrachte Vollstrahl-Einstoffdüse, mit einem Innendurchmesser von 1 mm, deren oberes Ende sich 45 mm über dem Boden befindet, werden stündlich 25 kg geschmolzener Harnstoff, entsprechend einer Eintragungsgeschwindigkeit von 7,25 m/sec in die Wirbelschicht eingedüst. Der Harnstoff wird quantitativ in ein Gemisch aus Isocyansäure und Ammoniak umgewandelt, das kontinuierlich von oben aus dem Reaktor abgezogen wird. Es wird keinerlei Krustenbildung durch Ablagerung von Cyanursäure festgestellt.

Beispiel 2

Ein von außen beheizter Wirbelschichtreaktor der gleichen Dimension wie in Beispiel 1 angegeben, ist mit einer Zweistoffdüse ausgestattet, die im Mittelpunkt der kreisförmigen Bodenfläche angebracht ist. Zentralrohr und Mantelrohr dieser Düse enden auf gleicher Höhe.

Das Zentralrohr der Düse, deren Ende sich 45 mm über dem Boden befindet, besitzt eine lichte Weite von 1 mm. Das Wirbelbett ist mit Sand eines Durchmessers von 0,1 bis 1 mm befüllt, der durch den durch den Boden des Reaktors mit einer Geschwindigkeit von 70 m/sek eintretenden Ammoniak, der als Wirbelgas dient, im Wirbelzustand gehalten wird. Durch den Ringspalt der Düse tritt Ammoniak mit der gleichen Geschwindigkeit als Blasegas aus. Der Sand befindet sich auf einer Temperatur von 360 °C.

Durch die Düse treten stündlich 25 kg geschmolzener Harnstoff in das Wirbelbett ein, das entspricht einer Eintragungsgeschwindigkeit von 7,25 m/sek.

Der Harnstoff wird quantitativ in ein Gemisch aus Isocyansäure und Ammoniak umgewandelt. Es wird keinerlei Verkrustung durch sich bildende Cyanursäure beobachtet.

**Patentansprüche**

1. Verfahren zur Herstellung eines cyanursäurearmen Isocyansäure-Ammoniak-Gasgemisches durch Erhitzen von in eine Wirbelschicht aus inertem Material eingeblasenem, geschmolzenem Harnstoff auf Temperaturen von 300 bis 400 °C innerhalb von weniger als 1 Sekunde, dadurch gekennzeichnet, daß der geschmolzene Harnstoff 35 bis 200 mm oberhalb der Eintrittsstelle des Wirbelgases mit einer Austrittsgeschwindigkeit von 3 bis 15 m/Sekunde parallel zur Strömungsrichtung des Wirbelgases und in einem Mindestabstand von 300 mm von Wandflächen und/oder dem Wärmetausch dienenden Flächen in das Wirbelbett eingedüst wird.

2. Verfahren nach Anspruch 1, dadurch gekennzeichnet, daß die Austrittsstelle des geschmolzenen Harnstoffs 45 bis 150 mm oberhalb der Eintrittsstelle des Wirbelgases liegt.

3. Verfahren nach den Ansprüchen 1 und 2, dadurch gekennzeichnet, daß die Austrittsgeschwindigkeit des geschmolzenen Harnstoffs 3,5 bis 12 m/Sekunde beträgt.

4. Verfahren nach den Ansprüchen 1 bis 3, dadurch gekennzeichnet, daß dem Wirbelschichtreaktor unmittelbar um die Eintrittsstelle des geschmolzenen Harnstoffes eine gegenüber den übrigen Bereichen des Reaktors erhöhte Wirbelgasmenge zugeführt wird.

5. Vorrichtung zur Durchführung des Verfahrens gemäß den Ansprüchen 1 bis 4, mit einem mit Eintrittsöffnungen für das Wirbelgas versehenen Boden, gekennzeichnet durch eine oder mehrere, 35 bis 200 mm über den Boden (2) in den Innenraum des Reaktors (1) hineinragende Einstoffdüsen (6), deren Mindestabstand von der beheizten Reaktorwand (7) mindestens 300 mm beträgt, die im Mittelpunkt des Bodens (2), bzw. in regelmäßiger Verteilung auf dem Boden (2) angeordnet sind.

6. Vorrichtung nach Anspruch 5, dadurch gekennzeichnet, daß die Austrittsöffnung der Einstoffdüse oder -düsen (6) 45 bis 150 mm oberhalb des Reaktorbodens (2) aneordnet ist.

7. Vorrichtung nach den Ansprüchen 5 und 6, dadurch gekennzeichnet, daß der Boden (2) des Reaktors (1) im Bereich unmittelbar um jene Stelle, an der die zur Einstoffdüse (6) führende Leitung (8) den Boden (2) durchdringt, mit Eintrittsöffnungen (5) für das Wirbelgas in der Weise ausgestattet ist, daß sich gegenüber den übrigen Bereichen des Bodens (2) eine erhöhte Fläche der Öffnungen (5) pro Flächeneinheit ergibt.

**Claims**

1. Process for the preparation of an isocyanic acid/ammonia gas mixture having a low cyanuric acid content by heating molten urea, which is blown into a fluidized bed consisting of an inert material, to temperatures of 300 to 480 °C in the course of less than 1 second, characterized in that the molten urea is sprayed, into the fluidized bed, 35 to 200 mm above the inlet point of the fluidizing gas, at an outlet velocity of 3 to 15 m/second, parallel to the direction of flow of the fluidizing gas and at a minimum distance of 300 mm from wall surfaces and/or surfaces serving for heat exchange.

2. Process according to Claim 1, characterized in that the outlet point of the molten urea is 45 to 150 mm above the inlet point of the fluidizing gas.

3. Process according to Claims 1 and 2, characterized in that the outlet velocity of the molten urea is 3.5 to 12 m/second.

4. Process according to claims 1 to 3, characterized in that the amount of fluidizing gas fed into the fluidized bed reactor is greater immediately around the inlet point of the molten urea than in the other regions of the reactor.

5. Apparatus for carrying out the process according to claims 1 to 4, with a base provided with inlet apertures for the fluidizing gas, characterized in that one or more one-material nozzles (6) project into the internal space of the reactor (1) by 35 to 200 mm above the base (2), are at a minimum distance of at least 300 mm from the heated reactor wall (7) and are arranged at the center of the base (2) or are distributed regularly over the base (2).

6. Apparatus according to Claim 5, characterized in that the outlet aperture of the one-material nozzle or nozzles (6) is located 45 to 150 mm above the reactor base (2).

7. Apparatus according to Claims 5 and 6, characterized in that the base (2) of the reactor (1) is provided, in the area immediately around that point at which the line (8) leading to the one-material nozzle (6) penetrates the base (2), with inlet apertures (5) for the fluidizing gas in such a way that the area of the apertures (5) per unit area is higher compared with the other regions of the base (2).

**Revendications**

1. Procédé pour la préparation d'un mélange gazeux acide isocyanique-ammoniac pauvre en acide cyanurique par chauffage d'urée fondue, injectée dans un lit de matière inerte fluidisé, aux températures de 300 à 480°C en moins de 1 seconde, caractérisé en ce que l'on pulvérise l'urée fondue dans le lit fluidisé à 35-200 mm au-dessus de l'emplacement d'admission du gaz fluidisant avec une vitesse de sortie de 3 à 15 m/seconde parallèlement à la direction d'écoulement du gaz fluidisant et à une distance minimale de 300 mm des surfaces de paroi et/ou des surfaces servant à l'échange thermique.

2. Procédé selon la revendication 1, caractérisé en ce que le point de sortie de l'urée fondue se situe à 45-150 mm au-dessus de l'emplacement d'admission du gaz fluidisant.

3. Procédé selon les revendications 1 et 2, caractérisé en ce que la vitesse de sortie de l'urée fondue s'élève à 3,5-12 m/seconde.

4. Procédé selon les revendications 1 à 3, caractérisé en ce que l'on introduit dans le réacteur à lit fluidisé, immédiatement autour du point d'entrée de l'urée fondue, une quantité de gaz fluidisant plus élevée que dans les autres zones du réacteur.

5. Dispositif pour la réalisation du procédé selon les revendications 1 à 4, comportant un plateau de fond ou plancher pourvu d'orifices d'admission pour le gaz fluidisant, caractérisé par une ou plusieurs buses à une substance (6), pénétrant dans l'espace intérieur du réacteur en s'y avançant jusqu'à 35-200 mm au-dessus du plancher (2), lesdites buses étant à une distance minimale de la paroi de réacteur (7) chauffée s'élevant au moins à 300 mm, et étant disposées au centre du plancher (2) ou en répartition régulière sur le plancher (2).

6. Dispositif selon la revendication 5, caractérisé en ce que l'embouchure de la buse ou des buses à une substance (6) est disposée à 45-150 mm au-dessus du plancher (2) de réacteur.

7. Dispositif selon les revendications 5 et 6, caractérisé en ce que le plancher (2) du réacteur (1) est équipé, dans la zone au voisinage immédiat de chaque point auquel le conduit (8) menant à la buse à une substance (6) traverse le plancher (2), d'orifices d'admission (4) pour le gaz fluidisant, de manière à ce qu'il résulte par rapport aux autres zones du plancher (2), une aire d'orifices (4) plus élevée par unité de superficie.

Fig 1

Fig 2